(19) Europäisches Patentamt
European Patent Office
Office européen des brevets

(11) Publication number: **0 092 687**
**B1**

(12) # EUROPEAN PATENT SPECIFICATION

(45) Date of publication of patent specification: **18.09.85**

(51) Int. Cl.$^4$: **C 09 K 5/00**

(21) Application number: **83103109.1**

(22) Date of filing: **29.03.83**

(54) **Organosiloxane-silicate copolymer antifreeze composition with nitrate corrosion inhibitor.**

(30) Priority: **31.03.82 US 363829**

(43) Date of publication of application:
**02.11.83 Bulletin 83/44**

(45) Publication of the grant of the patent:
**18.09.85 Bulletin 85/38**

(84) Designated Contracting States:
**DE FR GB IT**

(56) References cited:
**FR-A-1 201 821**
**US-A-2 349 338**
**US-A-3 341 469**

(73) Proprietor: **UNION CARBIDE CORPORATION**
**Old Ridgebury Road**
**Danbury Connecticut 06817 (US)**

(72) Inventor: **Cassin, Thomas Robert**
**9 Cedar Hill Road**
**Newton Connecticut 06470 (US)**
Inventor: **Jex, Victor Bird**
**29 Doris Drive**
**Scarsdale, N.Y. 10584 (US)**
Inventor: **Matulewicz, William Norbert**
**128 Senior Street**
**Montgomery, N.Y. 12547 (US)**
Inventor: **Mckenzie, Dale Alan**
**31 Circle Drive**
**Ridgefield Connecticut 06877 (US)**
Inventor: **Mohr, Paul Herman**
**47 Hardscrabble Hill**
**Chappaque, N.Y. 10514 (US)**

(74) Representative: **Eggert, Hans-Gunther, Dr.**
**Räderscheidtstrasse 1**
**D-5000 Köln 41 (DE)**

**EP 0 092 687 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of the Invention

This invention relates to a corrosion-inhibitive heat transfer composition comprising alcohol, and a water-soluble organosiloxane/silicate copolymer.

Description of the Prior Art

Corrosion-inhibitive heat transfer compositions of aqueous alcohol solutions heretofore have widely been employed in heat exchange systems associated with internal combustion engines, solar systems, and the like, to depress the freezing point of the coolant water, to raise its boiling point, and provide corrosion protection.

They are unique corrosion problems associated with the recent trend to the greater usage of aluminum in internal combustion engine cooling systems. In such systems, the use of prior art antifreeze/coolant compositions, which have been formulated for use in cooling systems constructed largely of steel, and which have employed corrosion inhibitors for ferrous metal surfaces, fail in many cases to provide adequate corrosion protection for the aluminum structural parts of the cooling system.

The prior art has proposed numerous corrosion-inhibitive heat transfer compositions based on alcohols and employing corrosion inhibitors. Various organic and inorganic inhibitors have been employed. Among the organic materials which have been utilized are the following: guanidine, citrates, coal tar derivatives, petroleum bases, thiocyanates, peptones, phenols, thioureas, tanin, quinoline, morpholine, triethanolamine, tartrates, glycol monoricinoleate, organic nitrites, mercaptans, organic oils, sulfonated hydrocarbons, fatty oils and soaps. Among the inorganic materials which have been employed as inhibitors are sulfates, sulfides, nitrates, fluorides, hydrogen peroxide, alkali metal chromates, nitrites, phosphates, borates, tungstates, molybdates, carbonates, and silicates and alkaline earth metal borates. Some of these corrosion inhibitors can create difficulties in their use. For example, nitrites have the tendency to form toxic nitrosamines in amine-containing compositions.

U.S. Patent Nos. 3,341,469 and 3,337,496 disclose an aqueous alcohol composition employing organosiloxane-silicate copolymers which have been widely employed in internal combustion and cooling systems. The composition disclosed in these patents comprises:

an alcohol;

an organosiloxane/silicate copolymer present in an amount of from 0.01 percent to 10 percent by weight based upon the weight of said concentrate and consisting essentially of:

(1) from 0.1 to 99.9 parts by weight of at least one member selected from the group consisting of (a) siloxane groups represented by the formula:

$$RSiO_{1.5}$$

wherein R is a member selected from the group consisting of the methyl, ethyl, phenyl and vinyl groups and (b) siloxane groups represented by the formula:

$$[YC_aH_{2a}]_b\overset{R'_c}{\overset{|}{Si}}O_{\frac{4-(b+c)}{2}}$$

wherein Y is a member selected from the group consisting of the cyano group, $CH_2(OH)CH(OH)$-group, $CH_2(OH)CH(OH)CH_2$-group,

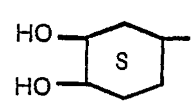

group, $CH_2(OH)CH(OH)CH_2O$-group and $R''(OCH_2CH_2)_n(OC_3H_6)_mO$-group, wherein R″ is a member selected from the group consisting of the monovalent hydrocarbons and the hydrogen atom, n and m are integers and n has a value of at least 1, m has a value from 0 to 20 inclusive, the ratio of n to m is at least 2 to 1, a is an integer and has a value of at least 2, $C_aH_{2a}$ is an alkylene group, the group represented by Y is separated from the silicon atom by at least two successive carbon atoms, b is an integer and has a value of from 1 to 3 inclusive, R′ is a monovalent hydrocarbon group, c is an integer and has a value from 0 to 2 inclusive, (b + c) has a value from 1 to 3 inclusive; and

(2) from 0.1 to 99.9 parts by weight of at least one silicate group represented by the formula:

$$\left[\frac{M_1O}{d}\right]_e \; SiO_{\frac{4-e}{2}}$$

wherein M is a cation that forms a water soluble silicate, a is the valence of the cation represented by M and has a value of at least 1 and e has a value from 1 to 3 inclusive, said parts by weight of said groups in the copolymer being based on 100 parts by weight of the copolymer.

The above described corrosion-inhibitive heat transfer compositions have enjoyed wide usage. Such composition has superior shelf-life, does not attack rubber parts in cooling systems, is characterized by low levels of foam formation, and is useful over a wide temperature range even after prolonged periods in service.

Despite the foregoing advantages, there exists a continuing need to enhance the corrosion inhibition character of such alcohol and organosiloxane/silicate copolymer composition to minimize corrosion in cooling systems containing aluminum as well as other metals.

Accordingly, it is an object of this invention to provide an improved corrosion-inhibitive heat transfer composition comprising alcohol and organosiloxane/silicate copolymer which is characterized by superior corrosion inhibition with respect to aluminum and other materials structurally employed in aqueous cooling systems, such as those employed for internal combustion engines.

Summary of the Invention

This invention relates in one aspect to an improved corrosion-inhibitive heat transfer composition concentrate comprising:

(I) an alcohol;

(II) an organosiloxane/silicate copolymer present in an amount of from 0.01 percent to 10 percent by weight based upon the weight of said concentrate and consisting essentially of:

(1) from 0.1 to 99.9 parts by weight of at least one member selected from the group consisting of (a) siloxane groups represented by the formula:

$$RSiO_{1.5}$$

wherein R is a member selected from the group consisting of the methyl, ethyl, propyl, phenyl and vinyl groups and (b) siloxane groups represented by the formula:

$$\overset{\displaystyle R'_c}{\overset{|}{[YC_aH_{2a}]_bSiO_{\frac{4-(b+c)}{2}}}}$$

wherein Y is a member selected from the groups consisting of halogen containing groups, cyano containing groups, aryl containing groups, amino containing groups, carboxy containing groups, carboxy ester containing groups, glycidoxy containing groups, mercapato containing groups, polyhydroxy containing groups, and mixtures thereof, *a* is an integer having a value of at least 1, the group represented by Y is separated from the silicon atom by at least one successive carbon atom, *b* is an integer, having a value of from 1 to 3 inclusive, R' is a monovalent hydrocarbon group, *c* is an integer having a value from 0 to 2 inclusive, (b + c) has a value from 1 to 3 inclusive; and

(2) from 0.1 to 99.9 parts by weight of at least one silicate group represented by the formula:

$$\left[\frac{M_1O}{d}\right]_e \; SiO_{\frac{4-e}{2}}$$

wherein M is a cation that forma a water soluble silicate, *d* is the valence of the cation represented by M and has a value of at least 1 and e has a value from 1 to 3 inclusive, said parts by weight of said groups in the copolymer being based on 100 parts by weight of the copolymer,

the improvement comprising said composition additionally containing at least one nitrate salt, in the absence of nitrite, in an amount sufficient to provide aluminum corrosion protection.

Typical "Y" substituents would include, for example, $CF_3$, CN, $NH_2$, Cl, COOH,SH, $CH_2(O)CHCH_2O$, $NH_2CH_2CH_2NH$, $CH_3OOC$, $CH_3COO(CH_2CH_2O)_n$,
$CH_3OOCCH_2CH_2NHCH_2CH_2NH$, carbohydrates,
$CH_2(OH)CH(OH)$
$CH_2(OH)CH(OH)CH_2$

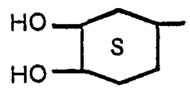,
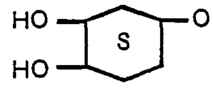,
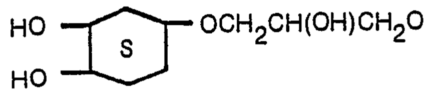,

$CH_2(OH)CH(OH)CH_2O$,
$CH_2(OH)CH(OH)CH_2OCH_2CH(OH)CH_2O$,
$CH_2(OH)CH_2OCH_2CH(OH)CH_2O$,
$R''(OCH_2CH_2)_n(OC_3H_6)_mO$ and
$R''(OCH_2CH_2)_n(OC_3H_6)_mOCH_2CH(OH)CH_2O$

and the like, wherein R" is a member selected from the group consisting of the monovalent hydrocarbon and the hydrogen atom, and *n* and *m* are integers having a value of from 0 to 20 inclusive.

In another aspect of the invention, the above-described organosiloxane/silicate copolymer composition additionally contains from 0.1 to 99.8 parts by weight of at least one siloxane group selected from the group consisting of the groups represented by the formulae:

$$R'''SiO_{1.5} \quad R_2'SiO \text{ and } R_3'SiO_{0.5}$$

wherein R''' is a monovalent hydrocarbon group other than the methyl, ethyl, propyl, phenyl and vinyl groups and R' has the above-defined meaning, said parts by weight of said groups in the copolymer being based on 100 parts by weight of the copolymer.

In two other embodiments of the invention, there are encompassed the above compositions additionally containing nitrite in the absence of phosphate, and nitrite in the absence of borate.

Description of the Preferred Embodiments

The above-described corrosion-inhibitive heat transfer concentrate may contain about 0.1% to about 10% by weight of water, as based upon the weight of the concentrate. Such aqueous concentrate may thereafter in use be further diluted by addition of from about 25% to about 90% by weight of water based upon the weight of the concentrate, to form a corrosion-inhibitive heat transfer composition suitable for introduction into automotive internal combustion engine cooling systems.

The alcohol employed in the composition of this invention preferably is at least one alcohol selected from the group consisting of methanol, ethanol, propanol, diethylene glycol, triethylene glycol, propylene glycol, glycerol an ethylene glycol.

The nitrate sale employed in the composition of this invention preferably is an alkali metal nitrate, more preferably sodium or potassium nitrate. The nitrate salt is preferably employed in an amount of from about 0.01% to about 1.0% by weight based upon the weight of the (water-free) concentrate, more preferably from about 0.1 to about 0.75 weight percent.

The silicone/silicate copolymer useful in the composition of this invention is preferably employed in an amount of from about 0.01% to about 10% by weight, based upon the weight of the concentrate, more preferably from about 0.03 weight percent to about 5 weight percent, most preferably from about 0.03 weight percent to about 2 weight percent, based on the weight of the concentrate.

The starting silicate used in producing the copolymers useful in this invention can be added to the reaction mixture as such or it can be formed *in situ* by adding the appropriate hydroxide (e.g. NaOH or KOH) and a silica to the reaction mixture.

The copolymers useful in the present invention can be formed *in situ* by mixing organosilanes with silicates in the presence of glycol, aqueous glycol or water. The process or making copolymers useful in the present invention is well known in the art and is disclosed, for example, in U.S. Patent 3,337,496 incorporated herein by reference.

Optional additives may be employed in minor amounts of less than 50 wt. percent based on the weight of the aqueous composition. Typical optional additives would include, for example, known corrosion inhibitors for metals such as, for example, molybdates, borates, phosphates and benzoates, hydroxy benzoates, silicones, nitrites, tolyltriazole, mercaptobenzothiazole, benzotriazole, and the like, or mixtures thereof. If one or more of the known inhibitors are employed together with the inhibitors of the present invention, the sum total of all inhibitors should be used in an "inhibitory effective amount", i.e., an amount sufficient to provide some corrosion inhibition with respect to the metal surfaces to be protected. Other typical optional additives would include wetting agents and surfactants such as, for example, known ionic and non-ionic surfactants such as the poly(oxylalkylene) adducts of fatty alcohols; antifoams and/or lubricants such as the well-known polysiloxanes and the polyoxyalkylene glycols, as well as any other minor ingredients known in the art that do not adversely affect the corrosion resistance sought to be achieved.

The following example is merely illustrative of, and not intended to limit, the present invention.

Example

In order to test an automobile coolant composition for effectiveness with and without the use of nitrate, several compositions were formulated, as identified in Table I below. The base fluid consisted of an aqueous borate-phosphate glycol composition.

Each of the compositions given in Table I below was subjected to standard potentiodynamic anodic polarization tests using a Princeton Applied Research Model 350 testing apparatus to give two values on a pure aluminum sample, namely the general surface corrosion value for a given fluid ($I_{Corr}$) and the tendency to pit value ($E_{Br}$). The tests were conducted at room temperature with agitation of eaach of the compositions.

The results are given in Table I below:

TABLE I
Electrochemical Data

| pH | Fluid # | Composition | $I_{Corr}$ | $E_{Br}$ |
|---|---|---|---|---|
| 10 | 1 | BASE | 5,000 | 1.3 |
| 10 | 2 | SILICONE A* | 5,317 | 1.4 |
| 10 | 3 | NITRATE | 5,600 | 1.7 |
| 10 | 4 | SILICONE A* NITRATE | 8,542 | 1.5 |
| 10 | 5 | SILICATE | 670 | 1.3 |
| 10 | 6 | COPOLYMER A** | 596 | 1.2 |
| 10 | 7 | SILICATE, NITRATE | 1,190 | 1.8 |
| 10 | 8 | COPOLYMER A**, NITRATE | 700 | 1.7 |

* Silicone A is an organosiloxane within the scope of this invention which is commercially present in "Prestone" and was employed for testing purposes here in an amount identical to the amount found therein.

** Copolymer A is a copolymer of the invention consisting of the reaction product of Silicone A and Silicate.

The results, as given in Table I above, indicate that, for a given composition, the addition of nitrate provides a reduction in the tendency to pit as measured by an increase in the $E_{Br}$ value. The silicate provides a reduction in the general surface corrosion as measured by a decrease in the $I_{Corr}$ value. The silicone alone shows no improvement in either tendency to pit or surface corrosion rate as compared to the base fluid. The combination of silicate and nitrate shows a high general surface corrosion rate ($I_{Corr}$) and a low tendency to pit ($E_{Br}$) refer to fluid #7 in Table I.

The testing of fluid #8, in contrast, shows an unexpected improvement. The combination of nitrate with silicone/silicate provides a minimal general surface corrosion rate, as indicated by the very low $I_{Corr}$ shown for fluid #8 of Table I, and a surprisingly effective protection against pit corrosion, as indicated by the high $E_{Br}$ value.

**Claims**

1. In an improved corrosion-inhibitive heat transfer composition concentrate comprising:

(I) an alcohol;

(II) an organosiloxane/silicate copolymer present in an amount of from 0.01 percent to 10 percent by weight based upon the weight of said concentrate and consisting essentially of:

(1) from 0.1 to 99.9 parts by weight of at least one member selected from the group consisting of (a) siloxane groups represented by the formula:

$$RSiO_{1.5}$$

wherein R is a member selected from the group consisting of the methyl, ethyl, propyl, phenyl and vinyl groups and (b) siloxane groups represented by the formula:

$$\begin{matrix} & R'_c \\ & | \\ [YC_aH_{2a}]_b & SiO_{\frac{4-(b+c)}{2}} \end{matrix}$$

wherein Y is a member selected from the groups consisting of halogen containing groups, cyano containing groups, aryl containing groups, amino containing groups, carboxy containing groups, carboxy ester containing groups, glycidoxy containing groups, mercapato containing groups, polyhydroxy containing groups, and mixtures thereof, *a* is an integer having a value of at least 1, the group represented by Y is separated from the silicon atom by at least one successive carbon atom, *b* is an integer having a value of from 1 to 3 inclusive, R' is a monovalent hydrocarbon group, *c* is an integer having a value from 0 to 2 inclusive, (b + c) has a value from 1 to 3 inclusive; and

(2) from 0.1 to 99.9 parts by weight of at least one silicate group represented by the formula:

$$\left[\frac{M_1O}{d}\right]_e SiO_{\frac{4-e}{2}}$$

wherein M is a cation that forms a water soluble silicate, *d* is the valence of the cation represented by M and has a value of at least 1 and e has a value from 1 to 3 inclusive, said parts by weight of said groups in the copolymer based on 100 parts by weight of the copolymer, the improvement comprising said composition additionally containing at least one nitrate salt, in the absence of nitrite, in an amount sufficient to provide aluminum corrosion protection.

2. An improved composition concentrate of claim 1 wherein the nitrate is present in an amount of at least about 0.01 weight percent based on the total weight of the composition.

3. An improved composition concentrate of claim 1 wherein the nitrate is present in an amount of from 0.05 to about 0.7 weight percent based on the total weight of the composition.

4. An improved composition concentrate of claim 1 wherein the nitrate is present in an amount of from about 0.08 to about 0.5 weight percent based on the total weight of the composition.

5. An improved composition concentrate of claim 1 wherein the nitrate is present in an amount of from about 0.1 to about 0.3 weight percent based on the total weight of the composition.

6. An improved corrosion-inhibitive heat transfer composition concentrate according to claim 1 containing nitrate in an amount sufficient to provide aluminum corrosion inhibition and as a further component (III) a nitrite salt, in the absence of phosphate.

7. An improved corrosion-inhibitive heat transfer composition concentrate according to claim 1 containing nitrate in an amount sufficient to provide aluminum corrosion inhibition and as a further component (III) a nitrite salt, in the absence of borate.

8. The composition concentrate of any of claims 1 through 7 wherein said Y is selected from the group consisting of carbohydrates, $CF_3$, CN, $NH_2$, Cl, COOH, SH,
$CH_2(O)CHCH_2O$, $NH_2CH_2CH_2NH$, $CH_3OOC$, $CH_3COO(CH_2CH_2O)_n$,
$CH_3OOCCH_2CH_2NHCH_2CH_2NH$
$CH_2(OH)CH(OH)$ group, $CH_2(OH)CH(OH)CH_2$ group,

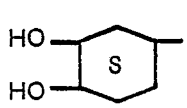 , 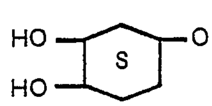 ,

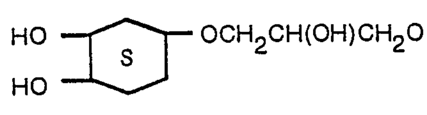 ,

$CH_2(OH)CH(OH)CH_2O$
$CH_2(OH)CH(OH)CH_2OCH_2CH(OH)CH_2O$
$CH_2(OH)CH_2OCH_2CH(OH)CH_2O$
$R''(OCH_2CH_2)_n(OC_3H_6)_mO$, and
$R''(OCH_2CH_2)_n(OC_3H_6)_mOCH_2CH(OH)CH_2O$ group, and the like, wherein R" is a member selected from the group consisting of the monovalent hydrocarbon and the hydrogen atom, and *n* and *m* are integers having a value of from 0 to 20 inclusive.

9. The composition concentrate of any of claims 1 through 7 wherein said organosiloxane/silicate

copolymer additionally contains from 0.1 to 99.8 parts by weight of a siloxane group selected from the group consisting of the groups represented by the formulae:

$$R'''SiO_{1.5} \quad R_2'SiO \quad \text{and} \quad R_3'SiO_{0.5}$$

wherein R''' is a monovalent hydrocarbon group other than the methyl, ethyl, propyl, phenyl and vinyl groups and R' has the above-defined meaning, said parts by weight of said groups in the copolymer being based on 100 parts by weight of the copolymer.

10. The composition concentrate of any of claims 1 through 7 which additionally contains water in an amount sufficient to form a corrosion-inhibitive heat transfer composition.

**Revendications**

1. Concentré perfectionné de composition de transfert de chaleur inhibitrice de corrosion, comprenant:

(I) un alcool;

(II) un copolymère organosiloxane/silicate présent en une quantité de 0,01 à 10% en poids sur la base du poids dudit concentré et consistant essentiellement en:

(1) 0,1 à 99,9 parties en poids d'au moins un représentant choisi dans la classe comprenant (a) des groupes siloxane représentés par la formule

$$RSiO_{1,5}$$

où R est un représentant de la classe comprenant les groupes méthyle, éthyle, propyle, phényle et vinyle et (b) des groupes siloxane représentés par la formule:

$$[YC_aH_{2a}]_b\overset{R'_c}{\overset{|}{Si}}O_{\frac{4-(b+c)}{2}}$$

dans laquelle Y est un représentant choisi dans la classe comprenant des groupes porteurs d'un halogène, des groupes porteurs d'un radical cyano, des groupes porteurs d'un radical aryle, des groupes porteurs d'un radical amino, des groupes porteurs d'un radical carboxy, des groupes porteurs d'un radical ester carboxylique, des groupes porteurs d'un radical glycidoxy, des groupes porteurs d'un radical mercapto, des groupes porteurs de plusieurs radicaux hydroxy, et leurs mélanges, *a* est un nombre entier ayant une valeur d'au moins 1, le groupe représenté par Y est séparé de l'atome de silicium par au moins un atome successif de carbone, *b* est un nombre entier ayant une valeur de 1 à 3 inclus, R ' est un groupe hydrocarboné monovalent, *c* est un nombre entier ayanta une valeur de 0 à 2 inclus, (b + c) a une valeur de 1 à 3 inclus; et

(2) 0,1 à 99,9 parties en poids d'au moins un groupe silicate représenté par la formule

$$\left[M_{\frac{1}{d}}O\right]_e SiO_{\frac{4-e}{2}}$$

dans laquelle M est un cation qui forme un silicate soluble dans l'eau, *d* est la valence du cation représenté par M et a une valeur d'au moins 1 et *e* a une valeur de 1 à 3 inclus, lesdites parties en poids desdits groupes dans le copolymère étant basées sur 100 parties en poids du copolymère, le perfectionnement résidant dans le fait que ladite composition contient en outre au moins un sel d'acide nitrique, en l'absence de nitrite, en une quantité suffisante pour assurer la protection de l'aluminium contre la corrosion.

2. Concentré perfectionné de composition suivant la revendication 1, dans lequel le nitrate est présent en une quantité d'au moins environ 0,01% en poids sur la base du poids total de la composition.

3. Concentré perfectionné de composition suivant la revendication 1, dans lequel le nitrate est présent en une quantité d'environ 0,05 à environ 0,7% en poids sur la base du poids total de la composition.

4. Concentré perfectionné de composition suivant la revendication 1, dans lequel le nitrate est présent en une quantité d'environ 0,08 à environ 0,5% en poids sur la base du poids total de la composition.

5. Concentré perfectionné de composition suivant la revendicaation 1, dans lequel le nitrate est présent en une quantité d'environ 0,1 à environ 0,3% en poids sur la base du poids total de la composition.

6. Concentré perfectionné de composition de transfert de chaleur inhibitrice de corrosion suivant la revendication 1, contenant un nitrate en une quantité suffisante pour assurer l'inhibition de la corrosion de l'aluminium et, comme autre composant,

(III) un nitrite, en l'absence de phosphate.

7. Concentré perfectionné de composition de transfert de chaleur inhibitrice de corrosion suivant la revendication 1, contenant un nitrate en une quantité suffisante pour assurer l'inhibition de la corrosion de l'aluminium et, comme autre composant

(III) un nitrite, en l'absence de borate.

8. Concentré de composition suivant l'une quelconque des revendications 1 à 7, dans lequel Y est choisi dans le groupe comprenant des glucides,

$CF_3$, CN, $NH_2$, Cl, COOH, SH,

$CH_2(O)CHCH_2O$, $NH_2CH_2CH_2NH$, $CH_3OOC$, $CH_3COO(CH_2CH_2O)_n$,

$CH_3OOCCH_2CH_2NHCH_2CH_2NH$

$CH_2(OH)CH(OH)$, le groupe $CH_2(OH)CH(OH)CH_2$

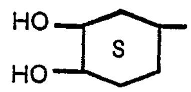 , 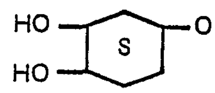 ,

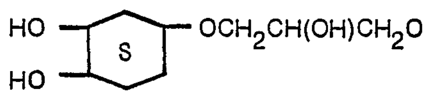 ,

$CH_2(OH)CH(OH)CH_2O$

$CH_2(OH)CH(OH)CH_2OCH_2CH(OH)CH_2O$

$CH_2(OH)CH_2OCH_2CH(OH)CH_2O$

$R''(OCH_2CH_2)_n(OC_3H_6)_mO$, et

$R''(OCH_2CH_2)_n(OC_3H_6)_mOCH_2CH(OH)CH_2O$

etc., R'' étant un représentant du groupe comprenant un hydrocarbure monovalent et l'atome d'hydrogène, et *n* et *m* sont des nombres entiers ayant une valeur de 0 à 20 inclus.

9. Concentré de composition suivant l'une quelconque des revendications 1 à 7, dans lequel ledit copolymère organosiloxane/silicate contient en outre 0,1 à 99,8 parties en poids d'un groupe siloxane choisi dans la classe comprenant des groupes représentés par les formules:

$$R'''SiO_{1,5} \quad R_2'SiO \quad \text{et} \quad R_3'SiO_{0,5}$$

où R''' est un groupe hydrocarboné monovalent autre que les groupes méthyle, éthyle, propyle, phényle et vinyle et R' a la définition donnée ci-dessus, lesdites, parties en poids desdits groupes dans le copolymère étant basées sur 100 parties en poids du copolymère.

10. Concentré de composition suivant l'une quelconque des revendications 1 à 7, qui contient en outre de l'eau en une quantité suffisante pour former une composition de transfert de chaleur inhibitrice de corrosion.

**Patentansprüche**

1. Konzentrat einer verbesserten korrosionsverhindernden Wärmeübertragungszusammensetzung, das umfaßt:

(I) einen Alkohol;

(II) ein Organosiloxan-/Silicat-Copolymer, das in einer Menge von 0,01 bis 10 Gewichtsprozent, bezogen auf das Gewicht des genannten Konzentrates, vorliegt, und im wesentlichen besteht aus:

(1) zwischen 0,1 und 99,9 Gewichtsteilen von wenigstens einem Glied, das aus der Gruppe ausgewählt ist, die besteht aus (a) Siloxangruppen der Formel

$$RSiO_{1,5}$$

in der R ein Glied ist, das aus der aus Methyl-, Ethyl-, Propyl-, Phenyl- und Vinylgruppe bestehenden Gruppe ausgewählt ist und (b) Siloxangruppen der Formel

$$[YC_aH_{2a}]_b\overset{R'_c}{\overset{|}{Si}}O_{\frac{4-(b+c)}{2}}$$

in der Y ein Glied ist, das aus folgenden Gruppen ausgewählt ist: halogenhaltige Gruppen, cyanhaltige Gruppen, arylhaltige Gruppen, aminohaltige Gruppen, carboxyhaltige Gruppen, carboxyesterhaltige Gruppen, glycidoxyhaltige Gruppen, mercaptohaltige Gruppen, polyhydroxyhaltige Gruppen und deren Mischungen; a ist eine ganze Zahl mit einem Wert von mindestens 1; die durch Y dargestellte Gruppe ist

von dem Siliciumatom durch mindestens ein Kohlenstoffatom getrennt; b is eine ganze Zahl mit einem Wert von 1 bis 3, R′ eine einwertige Kohlenwasserstoffgruppe, c eine ganze Zahl mit einem Wert von 0 bis 2, (b + c) besitzen einen Wert von 1 bis 3; und

(2) zwischen 0,1 und 99,9 Gewichtsteile von wenigstens einer Silikatgruppe der Formel

$$\left[\frac{M_1O}{d}\right]_e SiO_{\frac{4-e}{2}}$$

in der M ein Kation ist, das wasserlösliche Silikate bildet; d ist die Wertigkeit des Kations M und besitzt einen Wert von mindestens 1, e besitzt einen Wert von 1 bis 3; die angegebenen Gewichtsteile der genannten Gruppen im Copolymeren beziehen sich auf 100 Gewichtsteile des Copolymers, wobei die Verbesserung darin besteht, daß die genannte Zusammensetzung in Abwesenheit von Nitrit mindestens ein Nitratsalz zusätzlich enthält, in einer Menge, die ausreichend ist für den Korrosionsschutz von Aluminium.

2. Konzentrat einer verbesserten Zusammensetzung nach Anspruch 1, in der das Nitrat in einer Menge von mindestens 0,01 Gewichtsprozent, bezogen auf das Gesamtgewicht der Zusammensetzung, vorliegt.

3. Konzentrat einer verbesserten Zusammensetzung nach Anspruch 1, in der das Nitrat in einer Menge von zwischen 0,05 und 0,7 Gewichtsprozent, bezogen auf das Gesamtgewicht der Zusammensetzung, vorliegt.

4. Konzentrat einer verbesserten Zusammensetzung nach Anspruch 1, in der das Nitrat in einer Menge zwischen 0,08 und 0,5 Gewichtsprozent, bezogen auf das Gesamtgewicht der Zusammensetzung, vorliegt.

5. Konzentrat einer verbesserten Zusammensetzung nach Anspruch 1, in der das Nitrat in einer Menge zwischen 0,1 und 0,3 Gewichtsprozent, bezogen auf das Gesamtgewicht der Zusammensetzung, vorliegt.

6. Konzentrat einer verbesserten korrosionsverhindernden Wärmeübertragungszusammensetzung nach Anspruch 1 das Nitrat in einer für Aluminium-Korrosionsschutz ausreichenden Menge und als weitere Komponente (III) ein Nitritsalz, in Abwesenheit von Phosphat, enthält.

7. Konzentrat einer verbesserten korrosionsverhindernden Wärmeübertragungszusammensetzung nach Anspruch 1, das Nitrat in einer für Aluminium-Korrosionsschutz ausreichenden Menge und als weitere Komponente (III) ein Nitritsalz, in Abwesenheit von Borat, enthält.

8. Konzentrat einer Zusammensetzung nach einem der Ansprüche 1 bis 7, wobei Y ausgewählt ist aus der Gruppe, die besteht aus: Kohlehydraten,
$CF_3$, CN, $NH_2$, Cl, COOH, SH,
$CH_2(O)CHCH_2O$, $NH_2CH_2CH_2NH$, $CH_3OOC$, $CH_3COO(CH_2CH_2O)_n$,
$CH_3OOCCH_2CH_2NHCH_2CH_2NH$-Gruppe,
$CH_2(OH)CH(OH)$-Gruppe, $CH_2(OH)CH(OH)CH_2$-Gruppe,

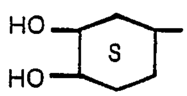 , 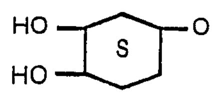 ,

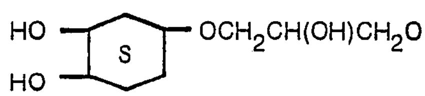 ,

$CH_2(OH)CH(OH)CH_2O$
$CH_2(OH)CH(OH)CH_2OCH_2CH(OH)CH_2O$ .
$CH_2(OH)CH_2OCH_2CH(OH)CH_2O$
$R''(OCH_2CH_2)_n(OC_3H_6)_mO$ und
$R''(OCH_2CH_2)_n(OC_3H_6)_mOCH_2CH(OH)CH_2O$-Gruppe und dergleichen, wobei R″ aus der Gruppe, die aus den einwertigen Kohlenwasserstoffen und dem Wasserstoffatom gebildet wird, ausgewählt ist, und n und m ganze Zahlen mit einem Wert von 0 bis 20 sind.

9. Konzentrat einer Zusammensetzung nach einem der Ansprüche 1 bis 7, wobei das genannte Organosiloxan-/silikat-Copolymer zusätzlich 0,1 bis 99,8 Gewichtsteile einer Siloxangruppe enthält, die aus der durch die folgenden Formeln dargestellten Gruppe ausgewählt wird:

$$R'''SiO_{1,5} \quad R_2'SiO \quad R_3'SiO_{0,5}$$

wobei R‴ eine andere einwertige Kohlenwasserstoffgruppe als die Methyl-, Ethyl-, Propyl- und Vinylgruppe ist und R′ die oben angegebene Bedeutung besitzt; die Gewichtsteile der genannten Gruppen in dem Copolymeren beziehen sich auf 100 Gewichtsteile des Copolymers.

10. Konzentrat einer Zusammensetzung nach einem der Ansprüche 1 bis 7, das zusätzlich Wasser in

einer Menge enthält, die ausreicht, eine korrosionsverhindernde Wärmeübertragungszusammensetzung zu bilden.